# EUROPÄISCHE PATENTSCHRIFT

(11) **EP 0 893 557 B1**
(45) Veröffentlichungstag und Bekanntmachung des Hinweises auf die Patenterteilung: **09.02.2005**
(21) Anmeldenummer: 98113610.4
(22) Anmeldetag: 21.07.1998
(51) Int. Cl.: E04H 15/46, F16B 2/24

(54) **Zeltstangen-Einheit sowie Klemmeinrichtung dafür**
Tent pole unit and clamping device therefor
Ensemble de mâts de tente et dispositif de blocage correspondant

(30) Priorität: 21.07.1997 DE 19731247; 27.08.1997 DE 19737368
(43) Veröffentlichungstag der Anmeldung: 27.01.1999
(73) Patentinhaber: EA Metallbau GmbH, D-88316 Isny-Grossholzleute (DE)
(72) Erfinder: Brutscher, Peter, 87490 Börwang (DE); Rietzler, Anton, 87439 Kempten (DE); Schmid, Ralf, 87439 Kempten (DE); Schweizer, Boris, 88161 Lindenberg (DE)
(74) Vertreter: Popp, Eugen, Dr.

(56) Entgegenhaltungen:
- EP-A- 0 371 829
- CH-A- 247 024
- FR-A- 532 496
- FR-A- 1 169 142
- FR-A- 2 562 935
- US-A- 1 330 363
- US-A- 1 502 898
- US-A- 1 845 143
- US-A- 2 465 378
- US-A- 2 536 253
- US-A- 5 595 410

## Beschreibung

Die Erfindung betrifft eine Klemmeinrichtung für teleskopierbar miteinander verbundene Stangenelemente, insbesondere aus Außenund Innenrohr bestehende Zeltstangen, die vorzugsweise Teil einer Zeltstangen-Einheit, bestehend aus einem Knotenelement, an dem wenigstens zwei, insbesondere drei oder vier rohrförmige Zeltstangen angeschlossen, insbesondere angelenkt sind, sind, oder Sonnenschirmhalterungen, Duschkopfhalterungen oder dergleichen Rohrstangenkonstruktionen.

Herkömmlicherweise werden Zeltstangen endseitig miteinander verbunden zu einer sogenannten Zeltstangen-Einheit, wobei die Verbindung über ein Knotenelement erfolgt, an dem die Zeltstangen endseitig anschließbar, insbesondere anlenkbar sind. Zeltstangen sind in der Regel rohrförmig. Ein Problem stellt die Länge der Zeltstangen dar, wobei die Größe der Verpackungseinheit bestimmt ist durch die jeweils längste Zeltstange. Um Verpackungseinheiten zu verkleinern, ist auch schon vorgeschlagen worden, Zeltstangen zwei- oder mehrteilig auszubilden. In der Regel werden die einzelnen Stangenelemente miteinander verschraubt oder endseitig ineinander gesteckt. Beide Ausführungsformen zeichnen sich durch einen relativ großen Montageaufwand aus. Auch läßt die Stabilität dieser Konstruktionen zu wünschen übrig.

Gemäß dem Stand der Technik werden verschiedene Maßnahmen vorgeschlagen, um rohrförmige Zeltstangen hinsichtlich ihrer Länge.anzupassen. So beschreiben die US 1,502,898 und die US 2,465,378 Mechanismen, bei welchen rohrförmig ineinander geführte Stangenelemente mittels Schrauben fixiert werden. Hierbei handelt es sich um eine übliche und altbekannte Klemm-Maßnahme, die jedoch immer zusätzliches Werkzeug, wie beispielsweise einen Schraubendreher oder Schraubenschlüssel, erfordert und insofern wenig anwenderfreundlich ist.

Ähnlich altbekannte Klemmvorrichtungen sind in der US 1,845,143 und in der FR 1.169.142 beschrieben. Die US 1,845,143 offenbart eine einfache Klemmvorrichtung für zwei teleskopartig ineinander axial verschiebbare Rohre mit einem einseitig angelenkten Klemmring. Der dortige Klemmring ist in einer Drahtschlaufe gehalten, in der er lediglich eine Halterung, jedoch keinerlei Führung erfährt. Insofern ist der dortigen Vorrichtung die Gefahr eines ungewollten Verklemmens oder eines ungewollten Lösens einer Klemmung inhärent und eine Handhabungssicherheit nicht gegeben.

Die vorgenannte FR 1.169.142 beschreitet hier einen anderen Weg und verwendet anstelle eines Klemmrings ein relativ kompliziert gebogenes Klemmelement mit Federmechanismus, das neben einem komplexen Aufbau auch eine hohe Fehleranfälligkeit birgt.

Ein etwas fortschrittlicherer Mechanismus ist in der US 2,538,253 beschrieben. Die dortige Druckschrift beschreibt eine Klemmeinrichtung mit teleskopierbar miteinander verbundenen, aus Außen- und Innenrohr bestehenden Stangenelementen, wobei die dortige Klemmeinrichtung eine am einen Ende des Außenrohrs, in das das Innenrohr einschiebbar ist, befestigte Muffe aufweist, durch die sich im montierten Zustand das Innenrohr axial verschieblich hindurch erstreckt, wobei die Muffe ein von außen her betätigbares Klemmstück aufweist, das in eine, eine Relativverschiebung zwischen Innenrohr und Außenrohr, blockierende Klemmstellung bringbar ist, wobei das Klemmstück ein Klemmring ist, der innerhalb einer in der Muffe ausgebildeten Kammer um eine sich quer zur Muffenlängsachse erstreckende Achse kippbar gelagert ist, und zwar zwischen einer sich senkrecht zur Muffenlängsachse erstreckenden Lage, in welcher Innen- und Außenrohr relativ zueinander axial verschiebbar sind, und einer Schräglage, in welcher Innen- und Außenrohr in axialer Richtung relativ zueinander blockiert sind.

Der Gegenstand der dortigen Druckschrift weist jedoch neben einer äußerst komplizierten Bauart einen gravierenden Nachteil auf, nämlich den, daß der in der Muffe angeordnete Klemmring sich lediglich lose um das dünnere der beiden axial gegeneinander verschieblichen Rohre erstreckt und mit Ausnahme einer Kerbe keinerlei Führung aufweist. Insbesondere ist der dortige Klemmring muffenseitig nicht gegen ein aus der Kerbe Herausrutschen gesichert. Vielmehr erstreckt sich der Klemmring auf der der Kerbe gegenüber liegenden Seite in eine relativ große Kammer, in der er frei beweglich ist und lediglich auf einer Nase aufliegt. Somit umfaßt die Bewegungsmöglichkeit des dortigen Klemmrings ein erhebliches Spiel, durch das es zu einem unsachgemäßen Verklemmen kommen kann, wodurch die dortige Vorrichtung unbrauchbar würde.

Darüber hinaus ist bei dortiger Klemmeinrichtung ein axiales Verschieben des inneren Rohres durch den Klemmring hindurch problematisch, da ein solches Verschieben nur dann möglich ist, wenn der Klemmring in extakt 90° zu dem inneren Rohr bzw. der Achsrichtung des inneren Rohres steht. Hierzu ist es nötig, die Betätigungseinrichtung, nämlich den beweglichen Stift, in einer exakten Position zu halten, die jedoch aufgrund der unzureichenden Führung des Klemmrings innerhalb der Muffe nur grob abgeschätzt werden kann. Insofern ist eine lediglich stockende Axialverschiebung der beiden Rohre mit einem häufigen unerwünschten Verklemmen zwangsläufig und unvermeidlich.

Demgemäß ist es die Aufgabe der vorliegenden Erfindung, eine Klemmeinrichtung der gattungsgemäßen Art aufzuzeigen, bei der sowohl eine Klemmposition als auch eine Position, in der eine Axialverschiebung von teleskopartig ineinander verschiebbaren Stangenelementen möglich ist, klar definiert ist.

Diese Aufgabe wird durch die Maßnahmen der Patentansprüche 1 oder 2 gelöst, wobei bevorzugte Ausführungsformen der erfindungsgemäßen Klemmeinrichtung in den Ansprüchen 3 ff. beschrieben sind.

Der Kern der Erfindung liegt also darin, daß die einzelnen Zeltstangen mittels einer erfindungsgemäßen Klemmeinrichtung teleskopierbar ausgebildet sind. Damit läßt sich die Zeltstangen-Einheit ohne großen Aufwand zu einer Packeinheit minimaler Größe zusammenklappen und zusammenschieben. Der Montageaufwand beim Aufstellen der Zeltstangen-Einheit ist entsprechend gering. Die einzelnen Zeltstangen brauchen lediglich auseinandergeklappt und auseinandergezogen werden, um das gewünschte Zeltgerüst erstellen zu können. Vorzugsweise umfaßt eine Packeinheit zwei oder mehr Zeltstangen-Einheiten der hier fraglichen Art, wobei die Einheiten unterschiedlich gestaltet sein können, d. h. in einer unterschiedlichen Anzahl von Zeltstangen sowie mit Zeltstangen, die zweifach oder auch dreifach teleskopierbar sind.

Die Klemmeinrichtung gemäß der Erfindung umfaßt also eine hülsenartige Muffe bzw. Buchse, durch die sich im montierten Zustand das innere Stangenelement axial verschieblich hindurch in das äußere Stangenelement hineinerstreckt, wobei die erwähnte Muffe, die vorzugsweise aus Kunststoff oder dergleichen hergestellt ist, ein von außen her betätigbares Klemmstück aufweist, welches in eine eine Relativverschiebung zwischen innerem Stangenelement und äußerem Stangenelement blockierende Klemmstellung bringbar ist. Das erwähnte Klemmstück ist vorzugsweise ein Klemmring, der innerhalb eines in der Muffe ausgebildeten Querspalts um eine sich quer zur Muffenlängsachse erstreckende Achse kippbar gelagert ist, und zwar zwischen einer sich senkrecht zur Muffenlängsachse erstreckenden Lage, in welche inneres und äußeres Stangenelement relativ zueinander verschiebbar sind, und einer Schräglage, in welcher inneres und äußeres Stangenelement relativ zueinander blockiert sind. In letztgenannter Klemmstellung sind inneres Stangenelement und Klemmring regelrecht miteinander verkeilt. Der Klemmring wirkt in seiner Schräglage axialklemmend auf den Außenumfang des inneren Stangenelements. In der Regel sind die Stangenelemente einer jeden Zeltstange rohrförmig ausgebildet. Das innere Stangenelement ist ein Innenrohr, während das äußere Stangenelement ein Außenrohr ist.

Die die Zeltstangen definierenden Rohre sind vorzugsweise mit einer CL (chromeless)-Schicht versehen. Diese Schicht verleiht den Zeltstangen eine auffallend schöne Optik. Darüberhinaus wird dadurch die Korrosionsbeständigkeit und damit auch Funktionssicherheit erhöht.

Zu der oben erwähnten Zeltstangen-Einheit sei auch noch erwähnt, daß die Teile derselben fest miteinander verbunden sind. Dementsprechend ist es nicht mehr erforderlich, einzelne Bauteile jeder Einheit zu suchen und gesondert zusammenzufügen. Die Zeltstangen-Einheiten können so gestaltet sein, daß sie den Aufbau eines Pultdachs, Bungalows, Rundum-Zelts oder dergleichen erlauben.

Aufgrund des geringen Pack- und Transportmaßes der erfindungsgemäßen Zeltstangen-Einheiten ist es denkbar, diese in einem Kasten zu verstauen, der an einem Caravan oder dergleichen angebracht ist. Damit stehen Zeltstangen-Einheiten zum Aufbau eines Caravan-Vordachs jederzeit zur Verfügung.

Nachstehend werden Ausführungsformen von erfindungsgemäß ausgebildeten Zeltstangen-Einheiten sowie eine bevorzugte Ausführungsform für eine erfindungsgemäße Klemmeinrichtung anhand der beigefügten Zeichnung näher erläutert. Es zeigen:
- Fig. 1: ein aus drei Zeltstangen-Einheiten zusammensetzbares Caravan-Vordachgerüst in perspektivischer Explosionsdarstellung;
- Fig. 2: eine Klemmeinrichtung für zwei teleskopartig ineinanderschiebbaren Rohren im Längsschnitt und in Rohr-Freigabestellung;
- Fig. 3: die Klemmeinrichtung entsprechend Fig. 2 in Klemmstellung;
- Fig. 4: die Klemmeinrichtung gemäß Fig. 2 in Vorderansicht;
- Fig.5: einen Teil (Muffe) der Klemmeinrichtung gemäß Fig. 2 im Längsschnitt;
- Fig. 6: den in Fig. 5 dargestellten Teil der Klemmeinrichtung in Teil-Unteransicht;
- Fig. 7: den in Fig. 5 dargestellten Teil der Klemmeinrichtung im Querschnitt längs Linie A-A in Fig. 5
- Fig. 8: einen weiteren Teil (Klemmring) der Klemmeinrichtung gemäß Fig. 2 in Vorderansicht;
- Fig. 9: einen der Klemmeinrichtung gemäß Fig. 2 zugeordneten Schieber in Seitenansicht;
- Fig. 10: den Schieber gemäß Fig. 9 in Unteransicht; und
- Fig. 11: den Schieber gemäß Fig. 9 in Vorderansicht.

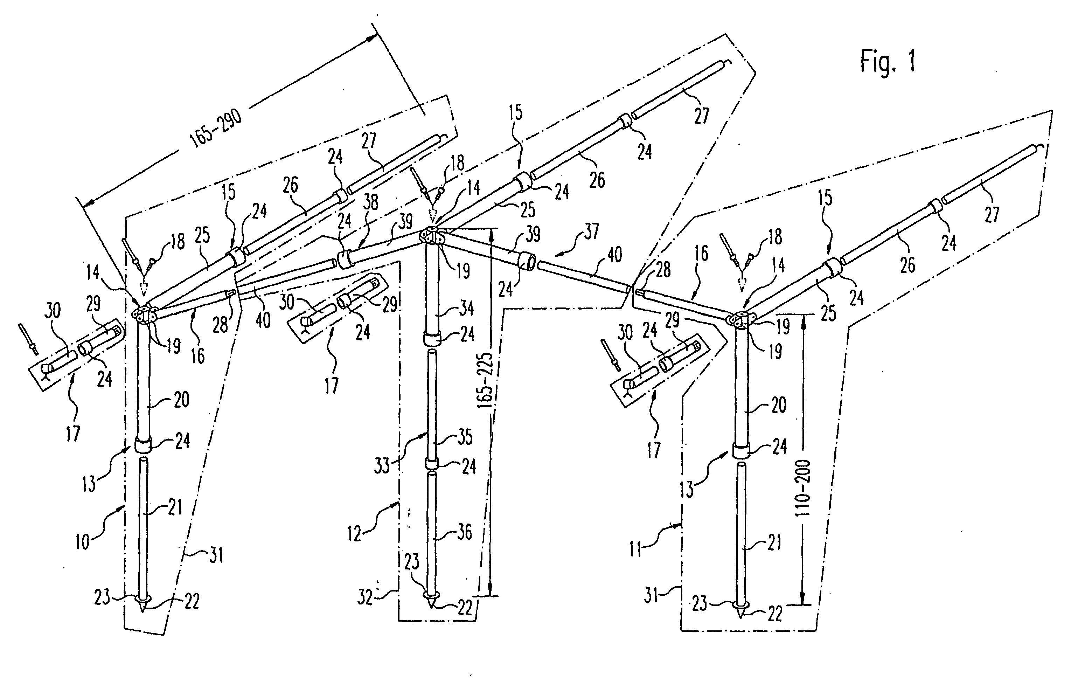

In Fig. 1 sind drei Zeltstangen-Einheiten 10, 11 und 12 zur Ausbildung eines Caravan-Vordachgerüstes dargestellt, wobei die Eck-Einheiten 10 und 11 identisch sind. Diese setzen sich jeweils zusammen aus einem teleskopierbaren Standbein 13, an dessen oberem Ende ein Knotenelement aus Kunststoff oder dergleichen befestigt ist. Dieses Knotenelement ist mit der Bezugsziffer 14 gekennzeichnet. An diesem Knotenelement sind drei Zeltstangen 15, 16, 17 gelenkig angeschlossen, und zwar so, daß sie zum Zwecke des Transports in eine Lage parallel zum Standbein klappbar sind. Das Knotenelement ist nach Art einer Kappe ausgebildet, die auf das obere Ende des Standbeins 13 aufsteckbar und mittels einer von oben her einsetzbaren Schraube 18 fixierbar ist. Die das Knotenelement definierende Kappe weist bei den Eck-Einheiten 10 und 11 drei unter einem vorbestimmten Winkel voneinander beabstandete Laschenpaare 19 auf, wobei zwischen den jeweils voneinander beabstandeten Laschen eines jeden Laschenpaars eine Zeltstange endseitig einfügbar ist, und zwar um einen die Laschen eines jeden Laschenpaars sowie das Anschlußende der Zeltstange durchsetzenden Bolzen verschwenkbar.

Das Standbein 13 besteht aus einem Außenrohr 20 und Innenrohr 21. Außen- und Innenrohr sind miteinander teleskopierbar. Außen- und Innenrohr bestehen jeweils aus Leichtmetall, insbesondere Aluminium. Am oberen Ende des Außenrohrs 20 ist das erwähnte Knotenelement 14 angeschlossen. Am unteren Ende des Innenrohrs 21 ist eine Standdorn 22 samt Standteller 23 ausgebildet bzw. angeordnet. Damit wird sichergestellt, daß das Standbein auch auf weicherem Untergrund nicht in diesen einsinkt.

Am unteren Ende des Außenrohres 20, in das das obere Ende des Innenrohrs 21 einsteckbar ist, ist eine Klemmeinrichtung 24 vorgesehen, mittels der die axiale Relativstellung zwischen Außen- und Innenrohr fixierbar ist.

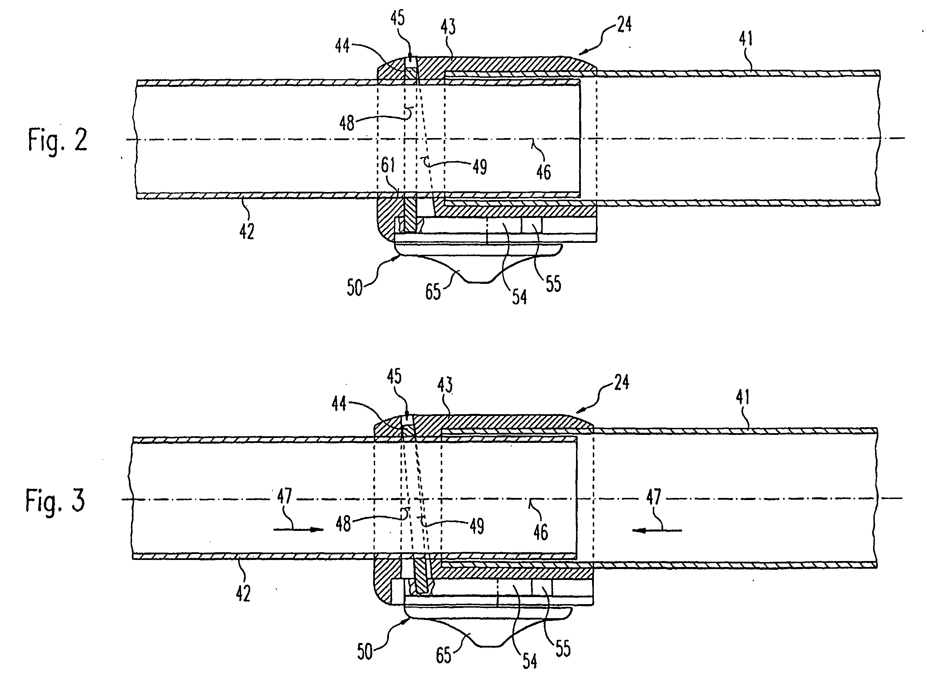

In ganz ähnlicher Weise ist die Zeltstange 15 ausgebildet. Diese umfaßt drei teleskopartig ineinanderschiebbare Stangenelemente, nämlich Rohrabschnitte 25, 26 und 27. Der Außenrohrabschnitt 25 ist am Knotenelement 14 angeschlossen. In diesen ist ein mittlerer Rohrabschnitt 26 einschiebbar. Ein Innen-Rohrabschnitt 27 ist in den mittleren Rohrabschnitt 26 teleskopierbar. Außen-Rohrabschnitt 25 sowie der mittlere Rohrabschnitt 26 weisen an ihren äußeren Enden jeweils Klemmeinrichtungen 24 entsprechend der Klemmeinrichtung 24 des Standbeins 13 auf. Die Konstruktion und Funktion der Klemmeinrichtungen 24 wird weiter unten näher beschrieben anhand der Figuren 2 ff.

Des weiteren ist am Knotenelement 14 eine Zeltstange 16 angeschlossen, die ebenfalls als Rohrabschnitt ausgebildet sein kann. Am freien Ende der Zeltstange 16 ist ein Steckabschnitt 28 ausgebildet, der in einen komplementären Abschnitt einer zugeordneten Zeltstange einer anderen Zeltstangen-Einheit einsteckbar ist. Dabei genügt bei der dargestellten Ausführungsform eine einfache Steckverbindung, die durch das über das Zeltstangengerüst gespannte Zelttuch zusammengehalten wird.

Bei Bedarf ist am Knotenelement 14 eine weitere relativ kurze Zeltstange 17 anschließbar, welches ebenfalls zwei teleskopartig ineinanderverschiebbare Rohrabschnitte 29, 30 umfaßt. Der Außen-Rohrabschnitt 29 ist unmittelbar am Knotenelement 14 angeschlossen. Das freie Ende des Innenrohrabschnitts 30 weist eine Querhülse zur Aufnahme eines nicht näher dargestellten Stangenelements auf. Die relative Lage zwischen Außen- und Innenrohrabschnitt erfolgt wiederum durch die bereits erwähnte Klemmeinrichtung 24.

Die Eck-Einheiten 10, 11 sind durch die strichpunktierten Linien 31 bzw. 32 begrenzt.

Zwischen den beiden Eck-Einheiten 10, 12 ist eine Giebel-Einheit vorgesehen, die ebenfalls ein Standbein 33 umfaßt, welches im Gegensatz zu den Standbeinen 13 der Eck-Einheiten 10, 11 aus drei teleskopartig ineinanderschiebbaren Rohrabschnitten 34, 35, 36 besteht. Am oberen Ende des Standbeins 34 ist das bereits erwähnte Knotenelement 14 befestigt, an dem insgesamt vier Zeltstangen der bereits beschriebenen Weise angelenkt sind. Zwei Zeltstangen entsprechen den Zeltstangen 15 und 17 der Eck-Einheiten 10, 11 und sind dementsprechend mit denselben Bezugsziffern gekennzeichnet.

Die beiden weiteren Zeltstangen 37, 38, die sich innerhalb der Frontebene des zu errichtenden Caravan-Vordachs erstrecken und den Giebel desselben definieren, bestehen jeweils aus zwei teleskopartig ineinanderschiebbaren Rohrabschnitten 39, 40. Die Außen-Rohrabschnitte 39 sind jeweils am Knotenelement 14 angeschlossen. Die freien Enden der Innen-Rohrabschnitte 40 weisen jeweils innere Steckabschnitte auf, in die die Steckabschnitte 28 am freien Ende der Zeltstangen 16 der Eck-Einheiten 10, 11 einsteckbar sind. Die gegenseitige Zuordnung zwischen den Zeltstangen 16 einerseits und den Zeltstangen 37, 38 der Giebel-Einheit 12 ist in Fig. 1 dargestellt.

Die axiale Relativstellung zwischen den einzelnen Rohrabschnitten 34, 35, 36 einerseits bzw. 25, 26, 27 sowie 29, 30 bzw. 39, 40 andererseits erfolgt jeweils durch die bereits erwähnte Klemmeinrichtung 24, die weiter unten näher erläutert wird.

Im übrigen sind Teile der Giebel-Einheit 12, die mit Teilen der Eck-Einheiten 10, 11 übereinstimmen jeweils mit denselben Bezugsziffern gekennzeichnet, so daß die Beschreibung dieser Teile in Verbindung mit einem der verschiedenen Einheiten genügt.

Zu der Klemmeinrichtung 24 sei erwähnt, daß diese an einem der beiden teleskopierbaren Stangenelementen, hier Rohrabschnitten angeordnet ist, und zwar jeweils am Außen-Rohr bzw. -Rohrabschnitt, und einen Anschlag umfaßt, der beim Zusammensetzen der Rohre bzw. Rohrabschnitte überwindbar ist, beim Gebrauch jedoch mit einem komplementären Anschlag an dem anderen der beiden Rohre bzw. Rohrabschnitte zusammenwirkt, derart, daß die beiden jeweils teleskopartig ineinanderschiebbaren Rohre bzw. Rohrabschnitte stets sicher zusammengehalten sind.

Anhand der Figuren 2 ff wird nunmehr eine bevorzugte Ausführungsform für eine Klemmeinrichtung 24 der genannten Art näher erläutert. Dabei geht es konkret um eine Klemmeinrichtung für die Fixierung der axialen Relativstellung zwischen einem Außenrohr 41 und einem Innenrohr 42. Das Außenrohr 41 steht stellvertretend für die Außen-Rohrabschnitte 20, 25, 29, 34, 39 bzw. mittleren Rohrabschnitten 26, 35 in Fig. 1, während das Innenrohr 42 stellvertretend steht für die Innen-Rohrabschnitte 21, 27, 30, 40 in Fig. 1.

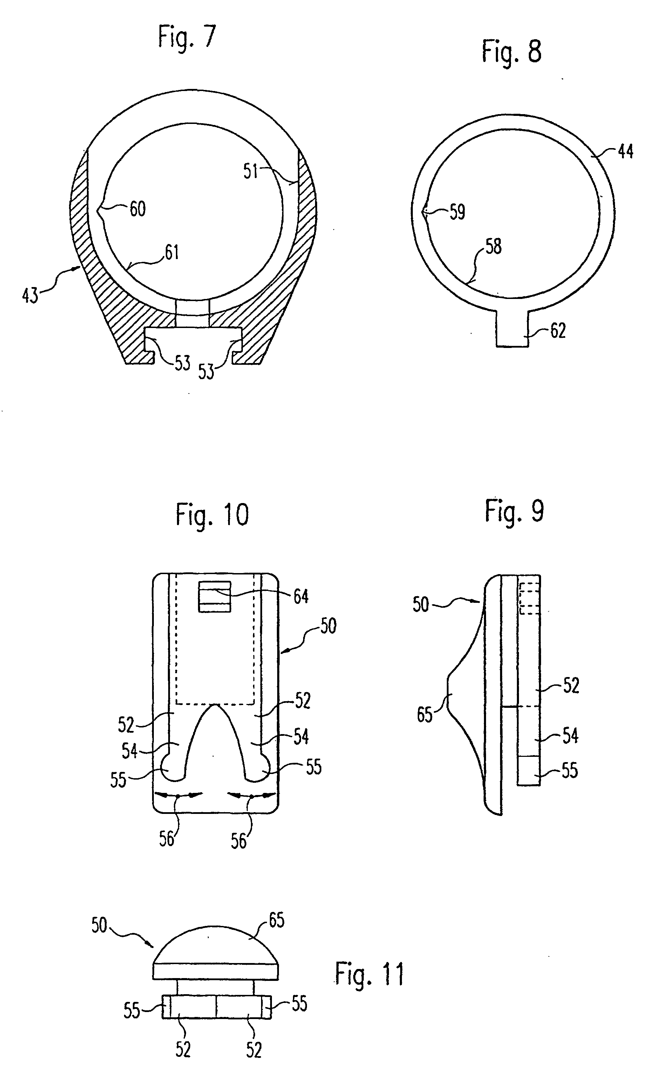

Die Klemmeinrichtung 24 umfaßt eine am einen Ende des Außenrohrs 41, an dem das Innenrohr 42 einschiebbar ist, befestigte, nämlich aufgeschrumpfte hülsenartige Buchse, nämlich Muffe 43, durch die sich in dem in den Fig. 2 und 3 dargestellten montierten Zustand das Innenrohr 42 axial verschieblich hindurcherstreckt, wobei die Muffe 43 ein von außen her betätigbares Klemmstück in Form eines Klemmrings 44 aufweist, welcher in eine eine Relativverschiebung zwischen Innenrohr 42 und Außenrohr 41 blockierende Klemmstellung entsprechend Fig. 3 bringbar ist. Wie erwähnt, ist das Klemmstück ein Klemmring, nämlich der Klemmring 44. Dieser ist innerhalb eines in der Muffe 43 ausgebildeten Querspalts um eine sich quer zur Muffenlängsachse 46 erstreckende Achse kippbar gelagert, und zwar zwischen einer sich senkrecht zur Muffenlängsachse 46 erstreckenden Lage entsprechend Fig. 2, in welche Innen- und Außenrohr relativ zueinander axial verschiebbar sind, und einer Schräglage entsprechend Fig. 3, in welcher Innen- und Außenrohr relativ zueinander blockiert sind. In dieser Schräglage ist der Klemmring 44 mit dem Innenrohr 42 regelrecht verkeilt, wobei bei axialem Druck in Richtung der Pfeile 47 in Fig. 3 die Klemmwirkung zwischen Klemmring 44 und Innenrohr 42 zusätzlich erhöht wird mit der Folge, daß die Stabilität mit zunehmendem Druck auf die teleskopierbaren Zeltstangen zunimmt. Dies ist insbesondere für die teleskopierbaren Standbeine 13 bzw. 33 der anhand der Fig. 1 beschriebenen Zeltstangen-Einheiten von großer Bedeutung. Der in der Muffe 43 ausgebildete Querspalt 45 ist durch eine sich senkrecht zur Muffenlängsachse 46 erstreckende Ebene 48 einerseits und eine sich schräg zur Muffenlängsachse 46 erstreckende Ebene 49 andererseits seitlich begrenzt, so daß der Klemmring 44 zwischen diesen beiden Ebenen aus der sich senkrecht zur Muffenlängsachse erstreckenden Lage in die schräge Klemmstellung und umgekehrt bewegbar ist. Der Querspalt 45 definiert also eine Art Keilspalt, wie die Fig. 2 und 3 sehr deutlich erkennen lassen. Innerhalb dieses Keilspalts ist der Klemmring 44 aus der Lage in Fig. 2 in eine Klemmstellung gemäß Fig. 3 und umgekehrt bewegbar. Zu diesem Zweck ist der Klemmring 44 mit einem in der Muffe 43 verschieblich gelagerten Schieber 50 verbunden, mittels dem der Klemmring 44 aus der Rohr-Freigabestellung gemäß Fig. 2 in die Rohr-Klemmstellung gem. Fig. 3 und umgekehrt bringbar, nämlich kippbar ist. An der dem Schieber 50 gegenüberliegenden Seite ist entsprechend Fig. 7 der Querspalt 45 offen ausgebildet. Durch die entsprechende Öffnung kann der Klemmring 44 in den Querspalt 45 eingesetzt werden, bevor das Innenrohr 42 in das Außenrohr eingeschoben wird. Das Innenrohr 42 wird dabei auch durch den Klemmring 44 in seiner sich senkrecht zur Muffenlängsachse 46 erstreckenden Lage entsprechend Fig. 2 hindurchgeschoben.

Der Schieber 50 ist an der Muffe längsverschieblich gelagert. Zu diesem Zweck weist der Schieber zwei seitlich vorstehende Führungsleisten 52 auf, die innerhalb von an der Muffe 43 ausgebildeten Längsführungsnuten 53 plaziert sind. Die Längsführungsnuten 53 erstrecken sich parallel zur Muffenlängsachse 46.

Entsprechend den Fig. 9 bis 11 umfassen die Längsführungsnuten 52 an einem stirnseitigen Ende des Schiebers 50 einen federelastischen Abschnitt 54, an dessen Außenseite jeweils eine Rastnase 55 angeformt ist. Die Federelastizität der Abschnitte 54 ist in Fig. 10 mit den Doppelpfeilen 56 angedeutet. Dementsprechend sind die Abschnitte 54 in einer durch die beiden Führungsleisten 52 definierten Ebene federelastisch ausgebildet.

Die Rastnasen 55 an den federelastischen Abschnitten 54 der beiden Führungsleisten 52 des Schiebers 50 wirken mit zwei in Muffenlängsrichtung hintereinander angeordneten Rastausnehmungen 56 und 57 derart zusammen, daß die weiter außen liegenden Rastausnehmungen 56 die Innenrohr-Freigabestellung des Schiebers 50 bzw. des mit diesem mitbewegbaren Klemmrings 44 definieren, während die weiter innen liegenden Rasterausnehmungen 57 die Klemmstellung des Schiebers 50 bzw. des mit diesem mitbewegbaren Klemmrings 44 vorgeben.

Der Schieber 50 ist bei der dargestellen Ausführungsform als einstückiges Kunststoffteil ausgebildet. An seiner im montierten Zustand von außen her zugänglichen Seite weist der Schieber 50 eine Fingerhandhabe 65 auf. Damit läßt sich der Schieber problemlos zwischen den beiden durch die Rastausnehmungen 56, 57 definierten Stellungen hin- und herbewegen.

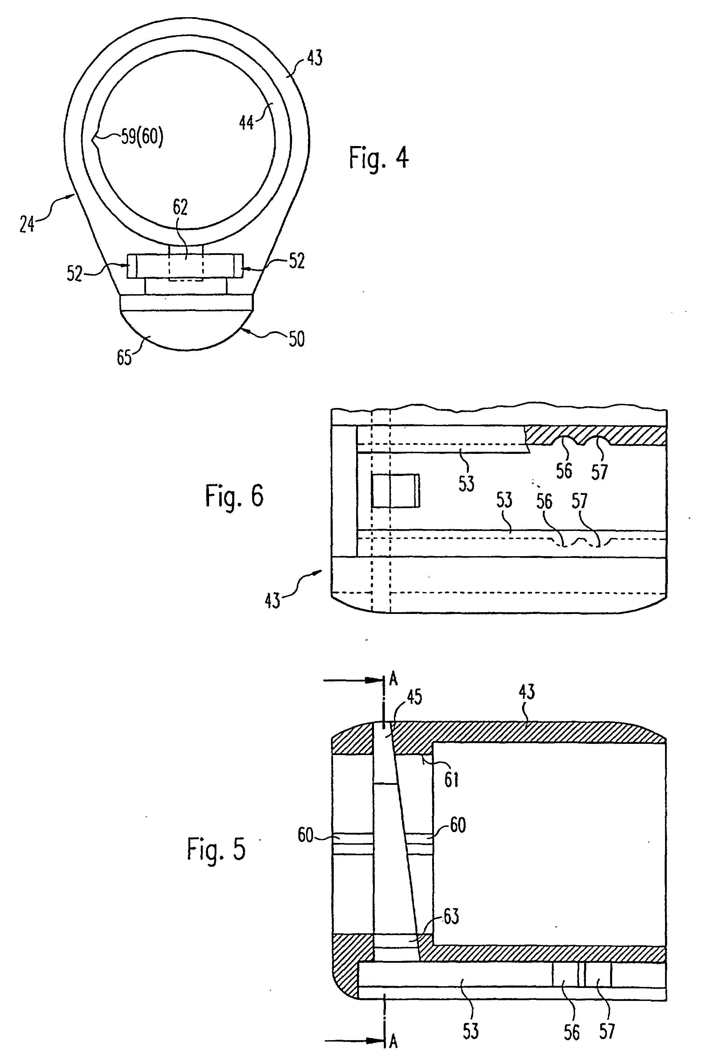

Entsprechend Fig. 8 weist der Klemmring 44 an seinem Innenumfang 58 eine Kerbe 59 auf, die einer hier nicht näher dargestellten Auskerbung am stirnseitigen Ende des Innenrohres 42, welches bei der Montage der Zeltstange durch die Muffe 43 hindurch in das zugeordnete Außenrohr 41 eingesteckt wird, entspricht, so daß bei Fluchtung von Ringkerbe 59 und Rohr-Auskerbung das Innenrohr 42 unter Überwindung der Klemmeinrichtung 24, d. h. unter Überwindung sowohl der Muffe als auch des vor der Montage des Innenrohrs 42 in die Muffe eingefügten Klemmrings 44 in das Außenrohr 41 einsteckbar und nach Verdrehung des Innenrohrs 42 relativ zum Außenrohr 41 und damit relativ zum Klemmring 44 sicher im Außenrohr 41 gehalten ist. Auch die Muffe 43 weist entsprechend der Kerbe 49 im Klemmring 44 eine Längskerbe 60 auf, die bei der Montage des Innenrohrs ebenfalls von der dort angebrachten Auskerbung passiert wird, bevor dann das Innenrohr relativ zum Außenrohr verdreht wird. Dann fluchtet die Auskerbung am Innenrohr nicht mehr mit der Klemmring-Kerbe 59 sowie Längskerbe 60 im Innenrohr-Durchgang der Muffe 43. Das Innenrohr 42 ist dann sicher innerhalb des Außenrohrs 41 gehalten. Im Extremfall schlägt die Innenrohr-Auskerbung an der inneren Begrenzung des Innenrohr-Durchgangs der Muffe 43 oder am Klemmring 44 an. Die innere Begrenzung des Innenrohr-Durchgangs der Muffe 43 bildet dementsprechend einen Anschlag für die am Innenrohr ausgebildete Auskerbung. Alternativ kann der Anschlag auch durch den Klemmring 44 definiert sein. Auf jeden Fall wird dadurch das Innenrohr sicher innerhalb des Außenrohres gehalten. Der Innenrohr-Durchgang in der Muffe 43 ist mit der Bezugsziffer 61 gekennzeichnet (siehe Fig. 5 und 7).

Entsprechend Fig. 8 umfaßt der Klemmring 44 noch eine radial nach außen vorstehende Nase 62, die durch eine Öffnung 63 am axial erweiterten Ende des Querspalts 45 in der Muffe 43 hindurch in eine korrespondierende Ausnehmung 64 (siehe Fig. 10) an der im montierten Zustand des Schiebers 50 innen gelegenen Seite desselben einfügbar ist derart, daß eine Mitnahme der Nase 62 bei Verschiebung des Schiebers 50 erfolgt, wodurch der Klemmring 44 aus einer Rohr-Freigabestellung entsprechend Fig. 2 in eine das Innenrohr 42 relativ zum Außenrohr 41 blockierende Schräglage entsprechend Fig. 3 und umgekehrt bringbar ist.

Es sei an dieser Stelle noch erwähnt, daß die sich senkrecht zur Muffenlängsachse 46 erstreckende Begrenzungsebene 48 des in der Muffe 43 ausgebildeten Querspalts 45 dem freien stirnseitigen Ende der Muffe 43 näher liegt als die sich schräg zur Mittenlängsachse 46 ersteckende Begrenzungsebene 49 (siehe Fig. 2 und 3).

Zu den Längenverhältnissen sei noch erwähnt, daß die Eck-Standbeine 13 auf eine Länge zwischen 110 cm und 200 cm einstellbar sind. Das Giebel-Standbein 33 ist auf eine Länge zwischen 165 cm und 255 cm einstellbar. Die Zeltstangen 15, die jeweils drei teleskopierbar ineinanderschiebbare Rohrabschnitte umfassen, sind auf eine Länge zwischen 165 cm und 290 cm einstellbar. Selbstverständlich sind auch andere Längen denkbar. Anhand der vorgenannten Angaben soll nur dargestellt sein, in welchem Bereich bzw. in welchem Längenverhältnis Änderungen bei den beschriebenen Zeltstangen-Einheiten möglich sind. Die Außen-Rohrabschnitte sowie mittleren Rohrabschnitte der Einheiten 10, 11 und 12 gemäß Fig. 1 weisen eine Standardlänge von jeweils 95 cm auf. Die Innen-Rohrabschnitte besitzen eine Länge von 100 cm bis 110 cm (Standbein). Es kann natürlich auch ein anderes Standardmaß gewählt werden. Nur hat sich dieses Standardmaß für ein Caravan-Vordachgerüst als vorteilhaft erwiesen.

Es sei darauf hingewiesen, daß die beschriebene Ausführungsform dahingehend abgewandelt werden kann, daß der in der Muffe 43 ausgebildete Querspalt durch zwei einen keilförmigen Spalt bildende, sich jeweils schräg zur Muffenlängsachse erstreckende Ebenen begrenzt sein kann, so daß der Klemmring zwischen einer sich senkrecht zur Muffenlängsachse erstreckenden Lage in eine vordere oder hintere jeweils schräge Klemmstellung und umgekehrt bewegbar ist. Damit ist eine Klemmung zwischen Innenund Außenrohr durch Bewegung des Schiebers 50 aus einer Mittenstellung heraus in eine vordere oder hintere Klemmstellung hinein möglich, wobei dem Schieber 50 dann drei Rastausnehmungen zugeordnet sind, um die mittige Rohr-Freigabestellung sowie die beiden außermittigen Rohr-Klemmstellungen zu definieren.

Zur Schonung der Oberfläche des Innenrohrs ist es zweckmäßig, den Klemmring entweder aus Kunststoff oder aus einem gummierten Metallring herzustellen. Im letztgenannten Fall sollte zumindest die mit dem Innenrohr in Berührung kommende Innenumfangsfläche des Klemmrings mit einem oberflächenschonenden Material, wie Gummi, Kunststoff oder dergleichen beschichtet sein.

Das Einsatzgebiet der beschriebenen Klemmeinrichtung ist sehr vielseitig, z. B. für Sonnenschirmhalterungen, Duschkopfhalterungen oder dergleichen Rohrstangen-Konstruktionen.

Statt eines Keilspalts für die Aufnahme des Klemmrings 44 ist es auch denkbar, einen Doppel-Keilspalt vorzusehen, der im Schnitt X-förmig ausgebildet ist. Damit sind ebenfalls die beiden schrägen Klemmstellungen des Klemmrings einerseits und eine mittige Rohr-Freigabestellung andererseits definiert. Der Klemmring ist bei dieser Ausführungsform um eine Achse verschwenkbar, die sich senkrecht durch die Muffenlängsachse hindurcherstreckt. Im übrigen erfolgt die Zusammenwirkung zwischen Klemmring und zugeordnetem Schieber in der oben beschriebenen Weise.

Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichenliste

- 10: Zeltstangen-Einheit (Eck-Einheit)
- 11: Zeltstangen-Einheit (Eck-Einheit)
- 12: Zeltstangen-Einheit (Giebel-Einheit)
- 13: teleskopierbares Standbein
- 14: Knotenelement
- 15: Zeltstange
- 16: Zeltstange
- 17: Zeltstange
- 18: Schraube
- 19: Laschenpaar
- 20: Außen-Rohrabschnitt
- 21: Innen-Rohrabschnitt
- 22: Standdorn
- 23: Standteller
- 24: Klemmeinrichtung
- 25: Außen-Rohrabschnitt
- 26: mittlerer Rohrabschnitt
- 27: Innen-Rohrabschnitt
- 28: Steckabschnitt
- 29: Außen-Rohrabschnitt
- 30: Innen-Rohrabschnitt
- 31: Begrenzungslinie
- 32: Begrenzungslinie
- 33: teleskopierbares Standbein
- 34: Außen-Rohrabschnitt
- 35: mittlerer Rohrabschnitt
- 36: Innen-Rohrabschnitt
- 37: Zeltstange
- 38: Zeltstange
- 39: Außen-Rohrabschnitt
- 40: Innen-Rohrabschnitt
- 41: Außenrohr
- 42: Innenrohr
- 43: Muffe
- 44: Klemmring
- 45: Querspalt
- 46: Muffenlängsachse
- 47: Pfeil
- 48: Begrenzungsebene
- 49: Begrenzungsebene
- 50: Schieber
- 51: Öffnung
- 52: Führungsleiste
- 53: Längsführungsnut
- 54: federelastischer Abschnitt
- 55: Rastnase
- 56: Rastausnehmung
- 57: Rastausnehmung
- 58: Innenumfang
- 59: Kerbe
- 60: Längskerbe
- 61: Innenrohr-Durchgang
- 62: Nase
- 63: Öffnung
- 64: Ausnehmung
- 65: Fingerhandhabe

## Patentansprüche

1. Klemmeinrichtung für teleskopierbar miteinander verbundene, aus Außen- und Innenrohr bestehende, Stangenelemente für Zeltstangen, Sonnenschirmhalterungen, Duschkopfhalterungen oder dergleichen Rohrstangenkonstruktionen, wobei die Klemmeinrichtung eine am einen Ende des Außenrohrs (41), an dem das Innenrohr (42) in das Außenrohr (41) einschiebbar ist, befestigte Muffe (43) umfaßt, durch die sich im montierten Zustand das Innenrohr (42) axialverschieblich hindurcherstreckt, wobei die Muffe (43) ein von außen her betätigbares Klemmstück (44) aufweist, welches in eine, eine Relativerschiebung zwischen Innenrohr (42) und Außenrohr (41) blockierende Klemmstellung bringbar ist, wobei das Klemmstück ein Klemmring (44) ist, der innerhalb eines in der Muffe (43) ausgebildeten Querspalts (45) um eine sich quer zur Muffenlängsachse (46) erstreckende Achse kippbar gehalten ist, und zwar zwischen einer sich senkrecht zur Muffenlängsachse (46) erstreckenden Lage, in welcher Innenund Außenrohr relativ zueinander axial verschiebbar sind, und einer Schräglage, in welcher Innen- und Außenrohr in axialer Richtung relativ zueinander blockiert sind,
**dadurch gekennzeichnet, daß**
der Klemmring (44) in dem Querspalt (45) gelagert ist, und daß der in der Muffe (43) ausgebildete Querspalt (45) durch eine sich senkrecht zur Muffenlängsachse (46) erstreckende Ebene (48) einerseits und eine sich schräg zur Muffenlängsachse (46) erstreckende Ebene (49) andererseits unter Ausbildung eines entsprechenden Keilspalts seitlich begrenzt ist, so daß der Klemmring (44) zwischen den vorgenannten Ebenen (48, 49) aus der sich senkrecht zur Muffenlängsachse (46) erstreckenden Lage in die schräge Klemmstellung und umgekehrt bewegbar ist.

2. Klemmeinrichtung für teleskopierbar miteinander verbundene, aus Außen- und Innenrohr bestehende, Stangenelemente für Zeltstangen, Sonnenschirmhalterungen, Duschkopfhalterungen oder dergleichen Rohrstangenkonstruktionen, wobei die Klemmeinrichtung eine am einen Ende des Außenrohrs (41), an dem das Innenrohr (42) in das Außenrohr (41) einschiebbar ist, befestigte Muffe (43) umfaßt, durch die sich im montierten Zustand das Innenrohr (42) axialverschieblich hindurcherstreckt, wobei die Muffe (43) ein von außen her betätigbares Klemmstück (44) aufweist, welches in eine, eine Relativerschiebung zwischen Innenrohr (42) und Außenrohr (41) blockierende, Klemmstellung bringbar ist, wobei das Klemmstück ein Klemmring (44) ist, der innerhalb eines in der Muffe (43) ausgebildeten Querspalts (45) um eine sich quer zur Muffenlängsachse (46) erstreckende Achse kippbar gehalten ist, und zwar zwischen einer sich senkrecht zur Muffenlängsachse (46) erstreckenden Lage, in welche Innenund Außenrohr relativ zueinander axial verschiebbar sind, und einer Schräglage, in welcher Innen- und Außenrohr in axialer Richtung relativ zueinander blockiert sind,
**dadurch gekennzeichnet, daß**
der Klemmring (44) in dem Querspalt (45) gelagert ist, und daß der in der Muffe (43) ausgebildete Querspalt keilförmig ist, d. h. durch zwei einen keilförmigen Spalt bildende, sich jeweils schräg zur Muffenlängsachse (46) erstreckende Ebenen begrenzt ist, so daß der Klemmring (44) zwischen einer sich senkrecht zur Muffenlängsachse (46) erstreckenden Lage in eine vordere oder hintere jeweils schräge Klemmstellung und umgekehrt bewegbar ist, wobei der Klemmring (44) mit einem in der Muffe (43) verschieblich gelagerten Schieber (50) verbunden ist, mittels dem der Klemmring (44) aus der Rohr-Freigabestellung in die Rohr-Klemmstellung bzw. umgekehrt bringbar, nämlich kippbar ist, und wobei der Schieber (50) wenigstens eine federelastisch vorgespannte Rastnase (55) aufweist, die mit zwei bzw. drei die Rohr-Freigabestellung einerseits und Rohr-Klemmstellung andererseits definierenden Rastausnehmungen (56, 57) an der Muffe (43) korrespondiert.

3. Klemmeinrichtung nach Anspruch 1,
**dadurch gekennzeichnet, daß**
der Klemmring (44) mit einem in der Muffe (43) verschieblich gelagerten Schieber (50) verbunden ist, mittels dem der Klemmring (44) aus der Rohr-Freigabestellung in die Rohr-Klemmstellung bzw. umgekehrt bringbar, nämlich kippbar ist.

4. Klemmeinrichtung nach Anspruch 3,
**dadurch gekennzeichnet, daß**
der Schieber (50) wenigstens eine federelastisch vorgespannte Rastnase (55) aufweist, die mit zwei bzw. drei die Rohr-Freigabestellung einerseits und Rohr-Klemmsteilung andererseits definierenden Rastausnehmungen (56, 57) an der Muffe (43) korrespondiert.

5. Klemmeinrichtung nach einem der Ansprüche 1 bis 4,
**dadurch gekennzeichnet, daß**
der Klemmring (44) an seinem Innenumfang (58) eine Kerbe (59) aufweist, die einer Auskerbung am stirnseitigen Ende des Innenrohres (42), welches bei der Montage der Zeltstange durch die Muffe (43) hindurch in das zugeordnete Außenrohr (41) eingesteckt wird, entspricht, so daß bei Fluchtung von Ringkerbe (59) und Rohr-Auskerbung das Innenrohr (42) unter Überwindung der Klemmeinrichtung (24) in das Außenrohr (41) einsteckbar und nach Verdrehung des Innenrohres (42) relativ zum Außenrohr (41) sicher im Außenrohr (41) gehalten ist.

6. Klemmeinrichtung nach einem der Ansprüche 1 bis 5,
**dadurch gekennzeichnet, daß**
der Klemmring (44) eine radial nach außen vorstehende Nase (62) umfaßt, die in eine korrespondierende Ausnehmung (64) am Muffenschieber (50) einfügbar ist derart, daß eine Mitnahme der Nase (62) bei axialer Verschiebung des Schiebers (50) erfolgt, wodurch der Klemmring (44) aus einer Rohr-Freigabestellung in eine das Innenrohr (42) in axialer Richtung relativ zum Außenrohr (41) blockierende Schräglage und umgekehrt bringbar ist.

7. Klemmeinrichtung nach einem der Ansprüche 1 und 3 bis 5,
**dadurch gekennzeichnet, daß**
die sich senkrecht zur Muffenlängsachse (46) erstreckende Begrenzungsebene (48) des in der Muffe (43) ausgebildeten Querspalts (45) dem freien stirnseitigen Ende der Muffe (43) näher liegt als die sich schräg zur Mittenlängsachse (46) erstreckende Begrenzungsebene (49).

8. Klemmeinrichtung nach einem der vorhergehenden Ansprüche,
**dadurch gekennzeichnet, daß**
der Klemmring aus Kunststoff oder Metall besteht, wobei im letztgenannten Fall zumindest die mit dem Innenrohr (42) in Berührung kommende Innenumfangsflache mit einem oberflächenschonenden Material, wie Gummi, Kunststoff oder dergleichen beschichtet ist.

9. Klemmeinrichtung nach einem der vorhergehenden Ansprüche,
**dadurch gekennzeichnet, daß**
die Muffe (43) aufgeschrumpft ist.

## Claims

1. A clamping means for rod elements connected to each other in a telescoping manner, and comprised of an outer and an inner tube, intended for tent poles, sunshade holders, shower head holders and similar tube rod constructions, said clamping means comprising a sleeve (43) attached to the one end of the outer tube (41) where the inner tube (42) is insertable into the outer tube (41), through which sleeve the inner tube (42), in the mounted state, extends axially displaceable, said sleeve (43) having a clamping piece (44) that may be actuated from outside and may be brought into a clamping position blocking a relative displacement between the inner tube (42) and the outer tube (41), said clamping piece being a clamping ring (44) which is held tiltable about an axis extending transversely to the longitudinal sleeve axis (46) within a transverse gap (45) formed in said sleeve (43), namely between a position extending perpendicularly to the longitudinal sleeve axis (46), in which position the inner and outer tubes are axially displaceable relative to each other, and a tilted position in which the inner and outer tubes are blocked relative to each other in the axial direction,
**characterized in that**
said clamping ring (44) is mounted in the transverse gap (45), and that said transverse gap (45) formed in the sleeve (43), on the one hand, is laterally delimited by a plane (48) extending perpendicularly to the longitudinal sleeve axis (46) and, on the other hand, by a plane (49) extending obliquely to the longitudinal sleeve axis (46) with formation of a corresponding wedge gap, so that said clamping ring (44) is moveable between the aforementioned planes (48, 49) from the position extending perpendicularly to the longitudinal sleeve axis (46) into the tilted clamping position, and vice versa.

2. The clamping means for rod elements connected to each other in a telescoping manner, and comprised of an outer and an inner tube, intended for tent poles, sunshade holders, shower head holders and similar tube rod constructions, said clamping means comprising a sleeve (43) attached to the one end of the outer tube (41) where the inner tube (42) is insertable into the outer tube (41), through which sleeve the inner tube (42), in the mounted state, extends axially displaceable, said sleeve (43) having a clamping piece (44) that may be actuated from outside and may be brought into a clamping position blocking a relative displacement between the inner tube (42) and the outer tube (41), said clamping piece being a clamping ring (44) which is held tiltable about an axis extending transversely to the longitudinal sleeve axis (46) within a transverse gap (45) formed in said sleeve (43), namely between a position extending perpendicularly to the longitudinal sleeve axis (46), in which position the inner and outer tubes are axially displaceable relative to each other, and a tilted position in which the inner and outer tubes are blocked relative to each other in the axial direction,
**characterized in that**
said clamping ring (44) is mounted in the transverse gap (45), and that said transverse gap formed in said sleeve (43) is wedge-shaped, i.e. is delimited by two planes each extending obliquely to the longitudinal sleeve axis (46) and forming a wedge-shaped gap, so that said clamping ring (44) is moveable between a position extending perpendicularly to the longitudinal sleeve axis (46) into a front or rear, in each case tilted clamping position, and vice versa, said clamping ring (44) being connected to a slide (50) mounted in said sleeve (43) so as to be displaceable, by means of which slide the clamping ring (44) may be brought from the tube release position into the tube clamping position or vice versa, namely may be tilted, and
said slide (50) having at least one resiliently biased latching nose (55) in correspondence with two or three latching recesses (56, 57) on the sleeve (43) defining, on the one hand, the tube release position and, on the other hand, the tube blocking position.

3. The clamping means according to claim 1,
**characterized in that**
said clamping ring (44) is connected to a slide (50) displaceably mounted in the sleeve (43), by means of which slide said clamping ring (44) may be brought from the tube release position into the tube blocking position, and vice versa, namely may be tilted.

4. The clamping means according to claim 3,
**characterized in that**
said slide (50) has at least one resiliently biased latching nose (55) in correspondence with two or three latching recesses (56, 57) on the sleeve (43) defining, on the one hand, the tube release position and, on the other hand, the tube blocking position.

5. The clamping means according to any one of claims 1 through 4,
**characterized in that**
said clamping ring (44) has on its inner circumference (58) a notch (59) corresponding to a notching at the frontal end of the inner tube (42) which, during installation of the tent pole, is inserted through said sleeve (43) into the associated outer tube (41), so that with an alignment of ring notch (59) and tube notching, the inner tube (42) overcoming the clamping means (24) may be inserted into the outer tube (41) and is securely held within the outer tube (41) by twisting the inner tube (42) relative to the outer tube (41).

6. The clamping means according to any one of claims 1 through 5,
**characterized in that**
said clamping ring (44) comprises a nose (62) projecting radially outward, which may be inserted in a corresponding recess (64) on the sleeve slide (50) in a manner that, upon an axial displacement of the slide (50), an entrainment of the nose (62) takes place, whereby the clamping ring (44) may be brought from a tube release position into a tilted position blocking the inner tube (42) in the axial direction relative to the outer tube (41), and vice versa.

7. The clamping means according to any one of claims 1 and 3 through 5,
**characterized in that**
the delimitation plane (48) of the sleeve gap (45) formed in sleeve (43) extending perpendicularly to the longitudinal sleeve axis (46) is closer to the free frontal end of the sleeve (43) than the delimitation plane (49) extending obliquely to the central longitudinal axis (46).

8. The clamping means according to any one of the preceding claims,
**characterized in that**
said clamping ring consists of plastics or metal, in the latter case at least the inner circumferential face contacting the inner tube (42) being coated with a surface-conserving material such as rubber, plastics or similar.

9. The clamping means according to any of the preceding claims,
**characterized in that**
the sleeve (43) is mounted by shrinking-on.

## Revendications

1. Dispositif de fixation, pour éléments en barre de mâts de tente, de fixations de parasol, de fixations de pomme de douche ou de structures similaires en tubes creux, télescopiques, reliés ensembles, se composant d'un tube extérieur et intérieur, le dispositif de fixation comprenant un manchon (43) en une extrémité du tube extérieur (41) à laquelle le tube intérieur (42) peut être coulissé à l'intérieur du tube extérieur (41) à travers lequel, en l'état monté, s'étend le tube intérieur (42) tout en pouvant se déplacer dans le sens axial, le manchon (43) présentant une pièce de fixation (44) pouvant être actionnée de l'extérieur, qui peut être amenée en une position de fixation bloquant un déplacement relatif entre le tube intérieur (42) et le tube extérieur (41), la pièce de fixation étant une bague de fixation (44) qui est maintenue de façon basculable à l'intérieure d'une fente transversale (45) constituée dans le manchon (43) autour d'un axe s'étendant transversalement à l'axe longitudinal du manchon (46) et ceci entre une position s'étendant perpendiculairement à l'axe longitudinal du manchon (46), dans laquelle tube intérieur et extérieur peuvent se déplacer relativement dans le sens axial l'un par rapport à l'autre, et une position en biais, dans laquelle tube intérieur et extérieur sont bloqués relativement dans le sens axial l'un par rapport à l'autre,
**caractérisé en ce que**
la bague de fixation (44) est logée dans la fente transversale (45) et que la fente transversale (45) constituée dans le manchon (43) est délimitée latéralement par un plan (48) s'étendant perpendiculairement à l'axe longitudinal du manchon (46) d'une part, et un plan (49) s'étendant en biais par rapport à l'axe longitudinal du manchon (46) d'autre part, en formant une fente en coin correspondante, si bien que la bague de fixation (44) peut se déplacer entre les plans (48, 49) précités de la position s'étendant perpendiculairement à l'axe longitudinal du manchon (46) à la position s'étendant en biais et l'inverse.

2. Dispositif de fixation, pour éléments en barre de mâts de tente, de fixations de parasol, de fixations de pomme de douche ou de structures similaires en tubes creux, télescopiques, reliés ensembles, se composant d'un tube extérieur et intérieur, le dispositif de fixation comprenant un manchon (43) en une extrémité du tube extérieur (41) à laquelle le tube intérieur (42) peut être coulissé à l'intérieur du tube extérieur (41) à travers lequel, en l'état monté, s'étend le tube intérieur (42) tout en pouvant se déplacer dans le sens axial, le manchon (43) présentant une pièce de fixation (44) pouvant être actionnée de l'extérieur, qui peut être amenée en une position de fixation bloquant un déplacement relatif entre le tube intérieur (42) et le tube extérieur (41), la pièce de fixation étant une bague de fixation (44) qui est maintenue de façon basculable à l'intérieure d'une fente transversale (45) constituée dans le manchon (43) autour d'un axe s'étendant transversalement à l'axe longitudinal du manchon (46) et ceci entre une position s'étendant perpendiculairement à l'axe longitudinal du manchon (46), dans laquelle tube intérieur et extérieur peuvent se déplacer relativement dans le sens axial l'un par rapport à l'autre, et une position en biais, dans laquelle tube intérieur et extérieur sont bloqués relativement dans le sens axial l'un par rapport à l'autre,
**caractérisé en ce que**
la bague de fixation (44) est logée dans la fente transversale (45) et que la fente transversale (45) constituée dans le manchon (43) est en forme de coin, autrement dit délimitée par deux plans constituant une fente en forme de coin s'étendant chaque fois en biais par rapport à l'axe longitudinal du manchon (46), si bien que la bague de fixation (44) peut se déplacer entre une position s'étendant perpendiculairement à l'axe longitudinal du manchon (46) et une position avant ou arrière de blocage chaque fois en biais et l'inverse, la bague de fixation (44) étant reliée à une coulisse (50) logée de façon coulissante dans le manchon (43), à l'aide de laquelle la bague de fixation (44) peut-être amenée, en l'occurrence basculée, de la position de libération du tube en la position de blocage du tube et l'inverse, la coulisse (50) présentant au moins un nez d'encliquetage (55) précontraint élastiquement à la façon d'un ressort qui correspond à deux ou trois creux d'encliquetage (56, 57) au manchon (43) définissant la position de libération du tube, d'une part, et la position de blocage du tube, d'autre part.

3. Dispositif de fixation selon la revendication 1,
**caractérisé en ce que**
la bague de fixation (44) est reliée à une coulisse (50) logée de façon coulissante dans le manchon (43) au moyen de laquelle la bague de fixation (44) peut-être amenée, en l'occurrence basculée, de la position de libération du tube en la position de blocage du tube et l'inverse.

4. Dispositif de fixation selon la revendication 3,
**caractérisé en ce que**
la coulisse (50) présente au moins un nez d'encliquetage (55) précontraint élastiquement à la façon d'un ressort qui correspond à deux ou trois creux d'encliquetage (56, 57) au manchon (43) définissant la position de libération du tube, d'une part, et la position de blocage du tube, d'autre part.

5. Dispositif de fixation selon l'une quelconque des revendications 1 à 4,
**caractérisé en ce que**
la bague de fixation (44) présente sur sa périphérie intérieure (58) une entaille (59) qui correspond à un entaillage à l'extrémité frontale du tube intérieur (42) qui, au montage du mât de tente, est introduit au travers du manchon (43) dans le tube extérieur (41) associé, si bien que lors de l'alignement de l'entaille de bague (59) et de l'entaillage de tube, le tube intérieur (42) peut être introduit dans le tube extérieur (41) en contrariant le dispositif de blocage (24) et, après rotation du tube intérieur (42) relativement au tube extérieur (41), est maintenu de façon sûre dans le tube extérieur (41).

6. Dispositif de fixation selon l'une quelconque des revendications 1 à 5,
**caractérisé en ce que**
la bague de fixation (44) comprend un nez (62) dépassant vers l'extérieur pouvant s'insérer dans un creux (64) correspondant de la coulisse de manchon (50), de façon telle que lors d'un déplacement axial de la coulisse (50) il se produit un entraînement du nez (62), ce par quoi la bague de fixation (44) peut être amenée d'une position de libération de tube en une position en biais bloquant le tube intérieur (42) en direction axiale relativement au tube extérieur (41) et l'inverse.

7. Dispositif de fixation selon l'une quelconque des revendications 1 et 3 à 5,
**caractérisé en ce que**
le plan de délimitation (48) s'étendant perpendiculairement à l'axe longitudinal du manchon (46) de la fente transversale (45) formée dans le manchon (43) est plus proche de l'extrémité frontale libre du manchon (43) que le plan de délimitation (49) s'étendant en biais par rapport à l'axe longitudinal du manchon (46).

8. Dispositif de fixation selon l'une quelconque des revendications précédentes,
**caractérisé en ce que**
la bague de fixation est en matière synthétique ou en métal, dans le dernier cas, au moins la surface de périphérie intérieure qui vient en contact avec le tube intérieur (42) étant enrobée d'un matériau de protection de la surface tel du caoutchouc, de la matière synthétique ou similaire.

9. Dispositif de fixation selon l'une quelconque des revendications précédentes,
**caractérisé en ce que**
le manchon (43) est emmanché par frettage.
